# EUROPEAN PATENT SPECIFICATION

(11) **EP 1 562 180 B1**
(45) Date of publication and mention of the grant of the patent: **01.04.2015**
(21) Application number: 04002693.2
(22) Date of filing: 06.02.2004
(51) Int. Cl.: G10L 15/26, G10L 15/22, B60R 16/02, G10L 15/08

(54) **Speech dialogue system and method for controlling an electronic device**
Sprachdialogsystem und Verfahren zum Steuern eines elektronischen Gerätes
Procédé et dispositif de système de dialogue vocal pour controler un appareil électronique

(43) Date of publication of application: 10.08.2005
(73) Proprietor: Nuance Communications, Inc., Burlington, MA 01803-4613 (US)
(72) Inventor: König, Lars, 89075 Ulm (DE)
(74) Representative: Grünecker, Kinkeldey, Stockmair & Schwanhäusser

(56) References cited:
- EP-A- 1 063 636
- US-B1- 6 594 630
- RUDNICKY A I ET AL: "SPOKEN LANGUAGE RECOGNITION IN AN OFFICE MANAGEMENT DOMAIN" SPEECH PROCESSING 2, VLSI, UNDERWATER SIGNAL PROCESSING. TORONTO, MAY 14 - 17, 1991, INTERNATIONAL CONFERENCE ON ACOUSTICS, SPEECH & SIGNAL PROCESSING. ICASSP, NEW YORK, IEEE, US, vol. 2 CONF. 16, 14 May 1991 (1991-05-14), pages 829-832, XP000222251 ISBN: 0-7803-0003-3
- KUHN R ET AL: "Learning speech semantics with keyword classification trees" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. 4, 27 April 1993 (1993-04-27), pages 55-58, XP010110392 ISBN: 0-7803-0946-4

## Description

The invention is directed to a speech dialogue system for controlling an electronic device and to a method for controlling an electronic device using the speech dialogue system.

Today most of the electronic devices are controlled by the user via control commands which are input using keys such as the keyboard of a computer, or by pressing buttons like in a hand-held telephone. However, more and more of these electronic devices are also becoming controllable via speech. Such electronic devices comprise a speech dialogue system capable of analyzing acoustic signals provided by a user in form of an acoustic utterance in order to determine control commands which are then carried out by the electronic device. Therein, control commands should be understood in the large sense, meaning that they also comprise parameter settings such as a telephone number or radio station etc.

Speech operated devices find their use, in particular, in environments where the hands of the user are needed to perform other actions, like in a vehicular environment where the user needs his or her hands to safely drive the vehicle and using a speech dialogue system to operate electronic devices, such as a car radio, a telephone, a climate control or a navigation system, helps in improving safety, as to operate the devices it is no longer necessary to withdraw the attention from the traffic surrounding the driver.

Such a device is known from EP 10 63636 A2 disclosing a method and apparatus for standard voice use interface and voice control devices. In this application it is disclosed that the access to the functionality of a voice control device is granted after a user communicates to the voice control device one of its associate client's names after a period of relative silence.

Today's speech dialogue systems do, however, present a major drawback, that is, the user friendliness of these devices is still very limited. Actually, it is not the device which adapts itself to the way the user wishes to carry out his dialogue with the device, but rather the user has to learn in which way he must carry out the dialogue so that the electronic device can understand the provided speech commands. In addition, prior to inputting control commands via a speech input the user is also forced to press a special button, usually referred to as the push-to-talk lever, in order to get a speech dialogue with the speech dialogue system going.

Therefore, it is the problem underlying the invention to provide a speech dialogue system for controlling an electronic device and a method for controlling an electronic device using a speech dialogue system which provide improved user-friendliness with respect to how the speech dialogue is carried out. Thereby a more comfortable operation which at the same time is simplified and is providing higher flexibility is also sought for.

This problem is solved by a speech dialogue system according to claim 1, a method for controlling an electronic device with a speech dialogue system according to claim 11 and a computer programme product according to claim 21.

Accordingly, a speech dialogue system (SDS) is provided for controlling an electronic device with a speech recognition means comprising a control command determining means to be activated by a keyword for determining a control command for controlling the electronic device, wherein the speech recognition means is configured to activate the command determining means for determining a control command upon receipt of an acoustic utterance comprising both keyword information and control command information.

The role of the keyword information is to let the speech dialogue system know that the user wishes to carry out a speech dialogue with the system in order to control an electronic device. Thus the keyword which is determined by the speech dialogue system out of the provided keyword information, is only directed to the speech dialogue system itself and does not have any further influence on the functioning of the electronic device. In contrast thereto the control commands are only directed to controlling the electronic device.

The speech dialogue system according to the invention actually analyses continuously the received acoustic signals to check whether the user has pronounced keyword information indicating the speech dialogue system that he wants to provide a control command for an electronic device. In this context acoustic utterance corresponds to at least one word, wherein the term "word" comprises besides words in the narrow sense also single characters as well as numbers. Once the keyword has been determined out of the keyword information the speech dialogue system does also search whether the provided acoustic utterance from the user comprises control command information related to a control command which can be carried out by the electronic device. If this is the case the speech dialogue system directly determines the control command without any further input from the user. Then the control command is further transmitted to the electronic device.

This means that in contrast to the state of the art speech dialogue systems the inventive speech dialogue system does not need the push-to-talk lever anymore and improves user-friendliness. In addition, with respect to those state of the art speech dialogue systems with acoustic keyword activation the speech dialogue system according to this invention further improves the user-friendliness as it is not necessary to first provide a keyword, then to await a reaction from the speech dialogue system telling the user that in a following utterance control commands can be input, and then finally to provide control command input via a second utterance. Thus with the speech dialogue system according to this invention, the user can carry out a dialogue with the speech dialogue system which is ergonomically close to a typical speech dialogue amongst humans.

According to an advantageous embodiment, the speech recognition means can be configured to activate the control command determining means upon receipt of an acoustic utterance comprising both keyword information and control command information being different from the keyword information. Again it is not necessary to first provide a keyword, then await a reaction from the speech dialogue system telling the user that in a following utterance control commands can be input, and then finally to provide control command input via a second utterance, but the user provides two distinct information in one utterance, one representing the keyword and one representing the control command. Thus the user can carry out a dialogue with the speech dialogue system which is ergonomically improved.

According to a preferred embodiment, the speech recognition means can comprise a first vocabulary set with at least one vocabulary element corresponding to the keyword and a second vocabulary set with vocabulary elements corresponding to control commands. The first vocabulary set is used to determine a keyword out of the provided keyword information. There is thus not only one single possibility to provide keyword information to activate the control command determining means but several words or a combination of words can be used. It is, for example, possible that the user can define his or her own keywords or that the keywords are predetermined by the manufacturer. The second vocabulary set is used to determine the control commands out of the provided control command information. The user-friendliness of the speech control system is thereby further enhanced as the user does not necessarily have to remember one, and only one, keyword.

Advantageously, the second vocabulary set of the speech dialogue system can be such that for at least one control command the second vocabulary set comprises more than one corresponding vocabulary element. For example, if the user wishes to drive back home and wants the navigation system to calculate the best-suited route, he could pronounce this in several ways such as, for example, "I want to drive home" or "show me the way how to drive home" or by inputting the home address including name of the city, street and house number. Those three different utterances therefore comprise three different control command information which, however, lead to the same control commands which the speech dialogue system outputs to the navigation system. Thus by providing several possibilities for the user to achieve the same control command(s) the user-friendliness and the flexibility of the speech dialogue system is further enhanced.

According to an advantageous embodiment, at least one vocabulary element of the first and second vocabulary set can be equal. This means that it is not necessary to have a dedicated keyword to inform the speech dialogue system that control commands are input but that actually by pronouncing a control command information at the same time the keyword information is provided and that therefore the speech dialogue system knows that both control command identification shall be started and that the control command is already input. Thus, again, the user-friendliness of the way the dialogue is carried out between a user and the speech dialogue system is improved.

Preferably, the speech recognition means can be configured to determine a keyword from a keyword information comprising more than one word and/or the control command determining means can be configured to determine a control command from a control command information comprising more than one word. It is furthermore not necessary that the words of the keyword information and/or the control command information are subsequent in the utterance but can be positioned anywhere in the utterance. By doing so an utterance such as "describe me the way home now" can be understood by the speech dialogue system, as it can determine from the terms "describe", "way" and "home" that the user wants to use the navigation system to drive back home. Thus with this feature the user-friendliness of the way a speech dialogue is carried out is again improved.

Preferably, the speech dialogue system can comprise storage means for storing at least part of an acoustic utterance. By providing the storage means the acoustic utterance input during a predetermined time duration can always be kept in the memory of the speech dialogue device so that analyzing is facilitated compared to analyzing the input permanently on the fly. For example, once a keyword has been determined it could be rechecked that, indeed, out of the context of the utterance using semantic rules it is cross-checked that the keyword was pronounced to start a speech dialogue. If, for example, the keyword was "car" there would be a difference in "car change the radio station" compared to " I bought a new car". In both cases the speech dialogue system would determine the word "car", however, having stored the utterance and using predefined semantic rules, it becomes possible for the speech dialogue system to determine that in the first case the user actually wants to control an electronic device using the speech dialogue system, whereas in the second case the user is talking to someone about his car which is not related to a speech dialogue to control an electronic device.

According to a preferred embodiment, the speech recognition means can be configured to determine a control command wherein a) the keyword information is received prior to the control command information or b) wherein the keyword information is received after the control command information using, in particular, the part of the received acoustic utterance which has been stored or c) wherein the keyword information is received in between parts of the control command information using, in particular, the part of the received acoustic utterance which has been stored. This means that it is no longer of importance whether the keyword information is provided prior to the control command information, after the control command information or during the control command information in the case it is build up out of several words. Thus, if the user forgets to announce the keyword information, but after having announced the control command information remembers that in order to start the speech dialogue system the keyword is necessary he still has the possibility to announce the keyword information without being forced to also pronounce the control command information again. If the term "car" corresponds to the keyword, this means that the utterance "change the radio station, car" will be understood by the speech dialogue system and leads to changing the radio station. Thereto after having determined the keyword "car" the speech dialogue system can analyze the part of the utterance which has been pronounced prior to announcing the keyword. The same is, of course, also possible in the case that the keyword is pronounced in the middle of a control command information, when the control command information is built up of several parts or words.

According to an advantageous embodiment, the speech dialogue system can further comprise acoustic and/or optical output means for outputting the determined control command and furthermore the speech dialogue system can be configured to await an acoustic utterance comprising a confirmation or rejection command for confirming or rejecting the determined control command. In order to prevent an erroneous execution of a control command, the speech dialogue system can be configured such that each time it determines a control command out of the continuous speech input received the speech dialogue system asks the user if indeed he wanted to provide a control command and then awaits the approval or rejection from the user. Thereby the user-friendliness is again improved as unwelcome actions from the speech dialogue system are prevented.

According to a further preferred embodiment, the speech dialogue system can further comprise noise suppression. The noise suppression means can comprise, for example, echo cancellation means, filters and the like. The echo cancellation means are especially useful as, for example, it becomes possible to filter out unwelcome utterances received by the speech dialogue system via other speech sources, such as for example the radio speaker. The noise suppression means thus helps in preventing the erroneous identification of control commands and leads to the further improvement of the user-friendliness and the stability of the speech dialogue system.

The invention further provides a vehicle, in particular a car, comprising one of the previously-described speech dialogue systems.

Furthermore, the invention provides a method for controlling an electronic device via speech control using a using a speech dialogue system with a speech recognition means comprising a control command determining means to be activated by a keyword for determining a control command for controlling the electronic device, comprising the steps of:
Receiving an acoustic utterance containing keyword information and control command information,
determining a keyword corresponding to the keyword information,
activating the command determining means, and
determining a control command corresponding to control command information.

As already described above with respect to the speech dialogue system with this inventive method for controlling an electronic device it is neither necessary to push a push-to-talk lever to start the dialogue, nor is it necessary to first provide a keyword then await a reaction from the speech dialogue system and then in a second utterance provide the desired control command information. Thus with this method a speech dialogue can be carried out which is more natural and thus more user-friendly.

According to an advantageous embodiment, the step of receiving an acoustic utterance can comprise receiving an acoustic utterance comprising both keyword information and control command information being different from the keyword information. Again it is not necessary to first provide a keyword, then await a reaction from the speech dialogue system telling the user that in a following utterance control commands can be input, and then finally to provide control command input via a second utterance, but the user provides two distinct information in one utterance, one representing the keyword and one representing the control command. Thus the user can carry out a dialogue with the speech dialogue system which is ergonomically improved.

In a preferred embodiment, the step of determining the keyword can comprise comparing the received keyword information with a first vocabulary set comprising at least one vocabulary element corresponding to the keyword and/or the step of determining a control command can comprise comparing the received control command information with the second vocabulary set with vocabulary elements corresponding to control commands. Thus more than one keyword can be used to start inputting control commands, and eventually keywords can be chosen or defined by the user him/herself.

Advantageously, the second vocabulary set can comprise for at least one control command more than one corresponding vocabulary element. This gives the user the possibility to provide the same command via different acoustic utterances.

In a further preferred embodiment, at least one vocabulary element of the first and second vocabulary set can be equal. Thus announcing control command information is sufficient to let the speech dialogue system know that the user wishes to provide control commands via speech and a separate announcement corresponding to a keyword is not necessary anymore.

Advantageously, the step of determining a keyword can comprise determining the keyword from a received keyword information comprising more than one word and/or wherein the step of determining a control command can comprise determining the control command from a received control command information comprising more than one word. Thus an utterance such as "describe me the way home now" can be understood by the speech dialogue system which determines from the terms "describe", "way" and "home" that the user wants to use the navigation system to drive back home.

Preferably, the method can further comprise the step of storing at least part of an acoustic utterance. Storing part of the utterance allows the speech dialogue system to carry out a more sophisticated analysis on the utterance to improve the reliability of the system.

In a preferred embodiment the control command can be determined wherein the step of determining the control command comprises determining the control command if the keyword information is received prior to the control command information, or if the keyword information is received after the control command information using, in particular, the part of the received acoustic utterance which has been stored, or if the keyword information is received in between parts of the control command information using, in particular, the part of the received acoustic utterance which has been stored. This means that it is no longer of any importance whether the keyword information is provided prior to the control command information, during or after the control command information.

In a variant, the method can comprise the step of outputting the determined control command via acoustic and/or optical output means, and further comprise the step of awaiting an acoustic input comprising a confirmation or rejection command for confirming or rejecting the determined control command after the step of determining the control command. Thereby an erroneous execution of a control command can be prevented,.

Preferably, the method can further comprise the step of removing at least a part of received background noise during the step of receiving an acoustic utterance. This further helps in preventing the erroneous identification of control commands and thereby leads to the further improvement of the reliability of control command recognition.

Furthermore, the invention provides a computer programme product comprising one or more computer readable media having computer executable instructions for performing the steps of the method of one of the preceding claims.

In the following, the features and advantages of the present invention will be described with reference to the drawings.
Fig. 1 illustrates a first embodiment of the speech dialogue system of the present invention;
Fig. 2 shows a second embodiment further comprising storage means, acoustic and/or optical output means and/or noise reduction means; and
Fig. 3 shows a flow diagram illustrating processing of a received acoustic utterance according to the present invention.

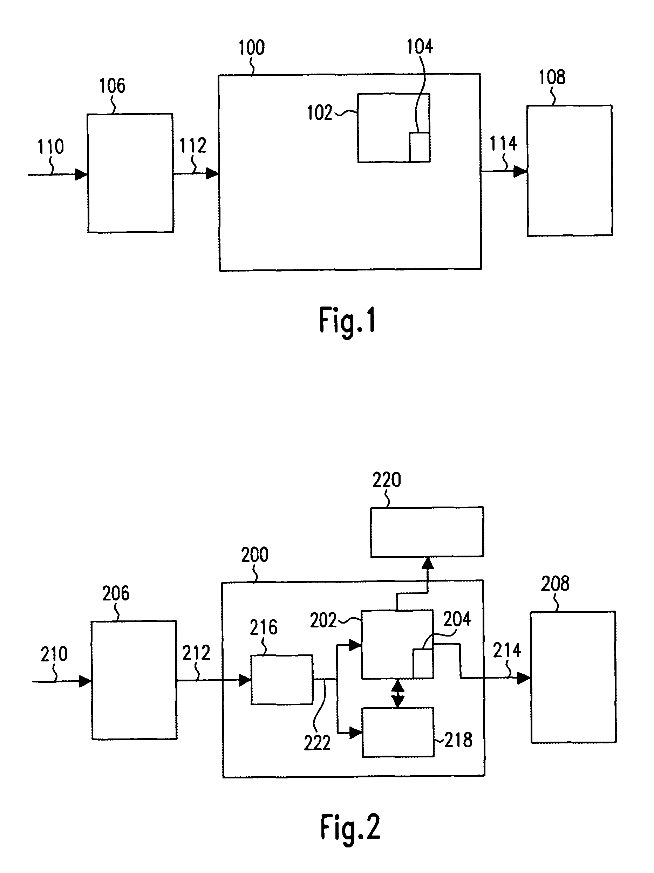

Fig. 1 shows a first embodiment of a speech dialogue system (SDS) 100 according to the invention. The SDS 100 comprises a speech recognition means 102 which further comprises a control command determining means 104.

The SDS 100 receives acoustic input comprising acoustic utterances received from a user of the SDS 100 via an acoustic input means 106, comprising, for example, a microphone. In the illustrated first embodiment the acoustic input receiving means 106 is not shown as being an integral part of the SDS 100. This can be useful in the case of the SDS 100 is employed in a vehicle. There the SDS 100, as one unit, is provided somewhere in the vehicle and the microphone 106, or eventually more microphones (like one per passenger seat), is located in a position where the receipt of acoustic input is somehow optimized. However, for different applications such as a hand/held electronic device, the acoustic input receiving means 106 may also be an integral part of the SDS 100.

The SDS 100 is furthermore connected with an electronic device 108 which like the acoustic input receiving means 106, is illustrated as an independent unit, but depending on the application may also be combined with the SDS. Actually the SDS 100 may be an integral part of the electronic device 108. Moreover, Fig. 1 illustrates one electronic device 108, however, the SDS may be configured to also be capable of controlling more than one electronic device which is in particular useful when the SDS is mounted in a vehicle and used to control several devices, such as an entertainment system, like a CD-player or a radio, a navigation system, a climate control, a telephone, a board computer, or the like.

In the following the functioning of the SDS 100 will be explained. The acoustic input receiving means 106 receives an acoustic utterance 110 from a user of the SDS 100. The acoustic input receiving means transforms this received acoustic signal into an electric signal 112 which is output towards the SDS 100. Inside the SDS 100 the received input is analyzed by the speech recognition means 102 which, if the utterance contains keyword information, activates the control command determining means 104 which looks for control command information contained in the acoustic utterance. If control command information is present in the utterance 110, the control command determining means 104 determines the corresponding control command 114 which is then output towards the electronic device 108. There it is then carried out.

The acoustic utterance 110 comprises at least one word, wherein the term "word" is used in the broad sense, meaning that the term "word" comprises also a character or a number. Most of the time the acoustic utterance 110 will comprise more than one word and the speech recognition means 102 therefore may be configured to be capable of determining individual words out of the acoustic utterance. The determined words or a combination of determined words is then compared with a predetermined vocabulary set. According to the present invention the SDS 100 comprises two vocabulary sets. The first vocabulary set comprises keywords, wherein one keyword can be a combination of several words, and the SDS 100 is configured such that if the speech recognition means 102 recognizes a keyword out of provided keyword information being part of the acoustic utterance 110 the control command determining means 104 is activated. Then the acoustic utterance 110 is searched for control command information, wherein the search comprises comparing the determined words or a combination thereof with a second vocabulary set comprising vocabulary elements related to control commands. In particular more than one vocabulary element may be related to one control command, so that different types of control command information lead to the same control command.

In a variant, it is also possible that at least part of the two vocabulary sets are equal such that, for example, each control command also represents a keyword at the same time such that to activate the control command determining means 104 it is not necessary for the user to input, besides control command information, further keyword information.

To carry out the speech recognition the speech recognition means 102 analyzes the received electric signal by performing, for example, a Fourier transform, and the recognition may be based on a hidden Markov model capable of determining words out of a continuous speech input comprising more than one word, or by neural networks. With the SDS 100 it is thus possible to determine the keyword and a control command out of one acoustic utterance.

Fig. 2 shows a second embodiment of a speech dialogue system 200 according to the present invention. As with the SDS 100 illustrated in Fig. 1, the SDS 200 is in connection with an acoustic input receiving means 206 having the same features as the acoustic input receiving means 106 of the SDS 100 and an electronic device 208 which also has the same features as the electronic device 108 illustrated in Fig. 1. The detailed description thereof will therefore be omitted, however all the properties and features are herewith incorporated by reference.

Like the SDS 100 of Fig. 1 the SDS 200 comprises a speech recognition means 202 further comprising a control command recognition means 204. The speech recognition means 202 and the control command recognition means 204 comprise the same features and properties as the speech recognition means 102 and the control command recognition means 104 of the SDS 100 illustrated in Fig. 1. The detailed description with respect to those will therefore be omitted, but all the properties and further features are herewith incorporated by reference.

In addition, the SDS 200 comprises a noise suppression means 216 and a storage means 218. In a variant, the noise suppression means 216 may actually be an integral part of the acoustic input receiving means 206. Furthermore the SDS 200 is in connection with acoustical or optical output means 220, such as loudspeakers or a display, which can be an integral part of the SDS 200 or, as shown here, an additional unit 220. Eventually, the acoustic and/or optical output means 220 may be shared with other applications such as the electronic device 208 which could, for example, be the case in a vehicle where one display is provided serving, e.g., the navigation system, a DVD player and the SDS.

The functioning of the SDS 200 will now be described in the following. Therein the properties and features of an acoustic utterance 210, an electric signal 212 and a control command 214 correspond to the ones of the acoustic utterance 110, the electric signal 111 and the control command 114 which have been employed in the description of the first embodiment concerning the SDS 100, illustrated in Fig. 1, and will therefore not repeated in detail again, but are incorporated by reference.

The electric signal 212 recorded by the acoustic input receiving means 206, receiving the acoustic utterance 210 from a user, is passed through the noise suppression means 216. This means may comprise different types of filters, adaptive noise canceller (ANC) and/or an acoustic echo canceller (AEC). In this way the quality of the signal can be improved and the signal-to-noise ratio increased. This is especially advantageous in a vehicular environment where the noise level can be relatively high due to, for example, engine noise, noise from the outside or noise from entertainment sources, such as the radio, a cassette player or a CD player. In a variant, the noise suppression means 216 can be part of the acoustic input receiving means 206 and/or the microphones used in the acoustic input receiving means 206 may be directional microphones predominantly receiving signals from the direction where the occupants of the car are positioned.

The enhanced signal 222 is then transmitted to the speech recognition means 202 where keyword information is searched for and in the positive case control command information is searched for, as previously described with respect to the SDS 100, illustrated in Fig. 1. In parallel, the enhanced signal is furthermore stored in the storage means 218 such that if necessary the speech recognition means 202 can also receive at least a part of the stored signal via the storage means 218. This is especially useful when the speech recognition means 202 has determined a keyword and thus activates the control command determining means 204. The control command determining means can then also search for control command information in the acoustic utterance prior to receiving the keyword information. Storing at least part of the received signal has furthermore the advantage that more precise analysis can be carried out as then not all of the analyzing work needs to be performed online. The storage means 218 is usually configured to store data corresponding to a predetermined time interval and thus continuously removes the earliest entry to add new incoming data.

In a variant, the enhanced signal 222 may not be transmitted both to the speech recognition means 202 and the storage means 218 but only to one of them, in particular the storage means 218 from which the speech recognition means 202 can receive the signals.

Once the speech recognition means 202 has determined a keyword and/or a control command the SDS 200 is configured to output a message via the acoustic or optic output means 220 to the user in order to ask for the confirmation that the user indeed wished to provide speech input to control an electronic device 208. Typical messages may comprise "speech dialogue system turned on, do you want to proceed" or "the speech dialogue system determined that you wish to change the radio station to FM94.8, please confirm". The SDS 200 then awaits a reaction from the user and in the case that the reaction is confirming the determined keyword and/or control command carries out the provided control command or awaits the input of a control command in the case that only keyword information has been input by the user. In the case that the SDS determines a keyword or a control command but it was not the user's intention to start a speech dialogue with the system, the user may reject the application of the determined control command.

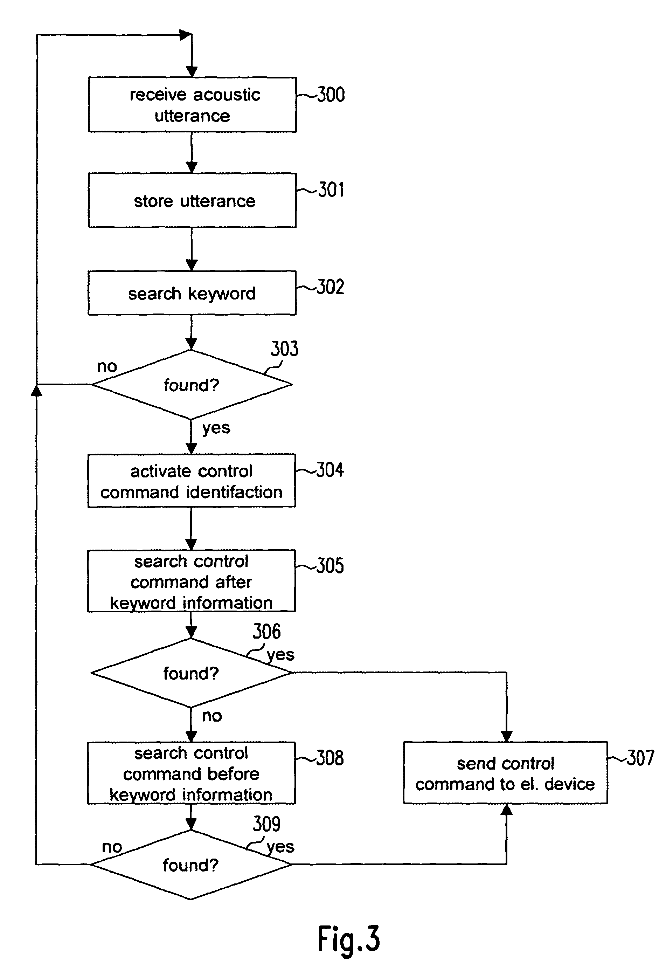

Fig. 3 is a flow diagram illustrating an embodiment of the method according to the present invention. The illustrated method can be carried out by an SDS as illustrated in Fig. 2, however other embodiments providing the features of this invention may also be used. The illustrated process may also be adapted such that it may be carried out by the SDS 100, as illustrated in Fig. 1. In the following the method will be explained using the SDS 200, as illustrated in Fig. 2 and as previously described.

In step 300 the acoustic input receiving means 206 receives an acoustic utterance 210 comprising at least one word, but usually comprising more than one word. The acoustic receiving means 206 creates electric signals out of the acoustic utterance 210 which can then be reworked by the noise suppression means in order to improve the signal-to-noise ratio. The received signals are then stored by the storage means 218 (step 301). The speech recognition means 302 reads the stored utterance or at least a part of the stored utterance, or eventually directly receives the acoustic utterance from the acoustic input receiving means 206 or from the noise suppression means 216 and starts searching for keyword information (step 302). Thereto the speech recognition means 302 determines the provided words and compares the determined words or a combination of the determined words with a first vocabulary set and checks whether one of the keywords present in the first vocabulary set has been pronounced by the user (step 303). If this is not the case, steps 300 - 302 are repeated or in a variant the SDS 100 checks whether new signals have been stored in the storage means 218.

If the speech recognition means 202 has determined a keyword the control command determining means 204 is activated (step 304) and starts searching for control command information in the part of the utterance that has been provided after the keyword information (step 305). Similar to the way the keyword is found a control command is also found by comparing determined words or a combination thereof with a predetermined second vocabulary set. If a control command has been determined, the speech recognition means 202 sends the control command to the electronic device 208 (step 307) where the command is carried out. If, on the other hand, in step 306 no control command information has been determined after the keyword, the control command determining means starts searching the acoustic utterance prior to the keyword information in order to check whether eventually the user has pronounced the control command prior to the keyword (step 308). In the case that the keyword is composed of more than one word, the control command determining means 204 may also be configured to search the acoustic utterance in between the words representing the keyword.

If a control command has been found, the speech recognition means 202 sends the control command to the electronic device 208 where the control command is carried out (step 307). If, on the other hand, no control command has been found in the acoustic utterance, the process is repeated and eventually a second acoustic utterance provided from the user will be analyzed for the presence of a control command therein.

In the following examples of a speech dialogue between a user and the SDS according to this invention will be given.

### EXAMPLE 1

### User: "SDS, I want to phone"

Out of this utterance the SDS (100 or 200) first determines the keyword "SDS" and then looks for a control command, which in this case is "telephone". In the following the SDS will inform the telephone that the user is going to make a phone call and at the same time may ask the user to provide the telephone number he wants to call.

### EXAMPLE 2

### User: "I want to phone, SDS"

In this example the user announced the keyword to activate the control command determining means after actually pronouncing the control command information. However, the inventive SDS is configured to also search for control command information in the acoustic utterance prior to the pronunciation of the keyword information. Thus again the SDS determines the keyword "SDS" and the control command "telephone" and will carry out the same actions as described with respect to example 1.

### EXAMPLE 3

### User: "I want to use the phone"

In this case no independent keyword information is provided and the SDS is nevertheless configured to determine that the user wants to carry out a phone call. However the presence of the term "phone" would not be sufficient for the SDS to determine that the user wants to carry out a telephone call as actually the user may also pronounce this term in a conversation he has with another occupant of the vehicle. Thus the SDS will be configured to analyze the whole sentence to find out whether the user wishes to carry out a phone call. In this case it would be the combination of "use" and "phone" together with the word "want" which will tell the SDS that indeed the user wants to carry out a telephone call.

### EXAMPLE 4

### User: "I want to ring home"

This example is similar to the previous one with the additional feature that the utterance comprises a more complex control command which is, first of all, that the user is going to carry out a phone call and that, secondly, the telephone shall look up the telephone number that corresponds to the term "home". Similar examples could be "I want to drive home" where the SDS has to first determine that this corresponds to keyword information and then has to analyze the control command information which leads to informing the navigation system that a route to the home address needs to be prepared and output to the user.

The invention provides the possibility to analyze an acoustic utterance such that if keyword information and control command information is provided in one utterance the SDS is capable of determining the keyword and of activating the control command determining means to also determine the control command. Thereby a speech dialogue can be carried out between a user and the SDS which is similar to a natural speech dialogue and thereby the user-friendliness of the speech dialogue between the machine and a human being is improved.

The inventive SDS and the inventive method for controlling an electronic device is, in particular, advantageous for use in a vehicular environment as described in the examples. However all kinds of electronic devices needing input from a human being may be controlled with an SDS according to this invention.

## Claims

1. Speech dialogue system (SDS) for controlling an electronic device (108, 208) with a speech recognition means (102, 202) comprising a control command determining means (104, 204) to be activated by a keyword for determining a control command for controlling the electronic device (108, 208), wherein the speech recognition means (102, 202) is configured to activate the command determining means (104, 204) for determining a control command upon receipt of an acoustic utterance (110, 210) comprising both keyword information and control command information,
the system **characterized in**
being configured to analyze received acoustic utterances,
further comprising a storage means (218) for storing received acoustic utterances corresponding to a predetermined time interval and for removing the earliest received acoustic utterance to add a new incoming acoustic utterance such that at least a part of an acoustic utterance is stored, and
the speech recognition means (102, 202) being configured to determine a control command in at least one of the received acoustic utterances stored in the storing means (218) wherein a) the keyword information is received after the control command information or b) the keyword information is received in between parts of the control command information.

2. Speech dialogue system according to claim 1, wherein the speech recognition means (102, 202) is configured to activate the control command determining means (104, 204) upon receipt of an acoustic utterance (110, 210) comprising both keyword information and control command information being different from the keyword information.

3. Speech dialogue system according to claim 1 or 2, wherein the speech recognition means (102, 202) comprises a first vocabulary set with at least one vocabulary element corresponding to the keyword and a second vocabulary set with vocabulary elements corresponding to control commands.

4. Speech dialogue system according to claim 3, wherein for at least one control command the second vocabulary set comprises more than one corresponding vocabulary element.

5. Speech dialogue system according to claim 3 or 4, wherein at least one vocabulary element of the first and second vocabulary set is equal.

6. Speech dialogue system according to one of claims 1 to 5, wherein the speech recognition means (102, 202) is configured to determine a keyword from a keyword information comprising more than one word.

7. Speech dialogue system according to one of claims 1 to 6, wherein the control command determining means (104, 204) is configured to determine a control command from a control command information comprising more than one word.

8. Speech dialogue system according to one of claims 1 to 7, further comprising acoustic and/or optical output means (220) for outputting of the determined control command and wherein the speech dialogue system is configured to await an acoustic utterance comprising a confirmation or rejection command information for confirming or rejecting the determined control command.

9. Speech dialogue system according to one of claims 1 to 8, further comprising noise suppression means (216).

10. Speech dialogue system according to one of claims 1 to 9, wherein acoustic utterances are continuously analyzed and wherein the earliest received acoustic utterance is continuously removed from the storage means (218).

11. Method for controlling an electronic device (108, 208) via speech control, using a speech dialogue system (100, 200) with a speech recognition means (102, 202) comprising a control command determining means (104, 204) to be activated by a keyword for determining a control command for controlling the electronic device (108, 208), comprising the steps of
- receiving acoustic utterances (300) and analyzing the received acoustic utterances to determine at least one acoustic utterance containing keyword information and control command information,
- determining (302) a keyword corresponding to the keyword information,
- activating (304) the command determining means, and
- determining (305) a control command corresponding to the control command information,
further comprising the step of storing (301) the received acoustic utterances corresponding to a predetermined time interval and removing the earliest received acoustic utterance to add a new incoming acoustic utterance such that at least a part of an acoustic utterance is stored, and wherein the step of determining the control command comprises determining the control command in at least one of the received acoustic utterances which has been stored
- if the keyword information is received after the control command information or
- if the keyword information is received in between parts of the control command information.

12. Method according to claim 11, wherein the step of receiving (300) acoustic utterances comprises receiving an acoustic utterance comprising both keyword information and control command information being different from the keyword information.

13. Method according to claim 12, wherein the step of determining (302) a keyword comprises comparing the received keyword information with a first vocabulary set comprising at least one vocabulary element corresponding to the keyword and wherein the step of determining (305) a control command comprises comparing the received control command information with a second vocabulary set with vocabulary elements corresponding to control commands.

14. Method according to claim 13, wherein for at least one control command the second vocabulary set comprises more than one corresponding vocabulary elements.

15. Method according to claim 13 or 14, wherein at least one vocabulary element of the first and second vocabulary set is equal.

16. Method according to one of claims 11 to 15, wherein the step of determining (302) a keyword comprises determining the keyword from a received keyword information comprising more than one word.

17. Method according to one of claims 11 to 16 or wherein the step of determining (305) a control command comprises determining a control command from a received control command information comprising more than one word.

18. Method according to one of claims 11 to 17, comprising after the step of determining the control command
- the step of outputting the determined control command via acoustic and/or optical output means, and
- the further step of awaiting an acoustic input comprising a confirmation or rejection command for confirming or rejecting the determined control command.

19. Method according to one of claims 11 to 18, further comprising the step of removing at least a part of received background noise during the step of receiving an acoustic utterance.

20. Method according to one of claims 11 to 19, wherein acoustic utterances are continuously analyzed and wherein the earliest received acoustic utterance is continuously removed from the storage means (218).

21. Computer programme product, comprising one or more computer readable media having computer-executable instructions for performing the steps of the method of one of the preceding claims 11 - 20.

## Patentansprüche

1. Ein Sprachdialogsystem (SDS) zum Steuern eines elektronischen Gerätes (108, 208) mit einer Spracherkennungseinrichtung (102, 202) eine Steuerbefehlermittlungseinrichtung (104, 204) aufweisend, welche durch ein Kennwort zur Ermittlung des Steuerbefehls aktiviert wird, um das elektronische Gerät (108, 208) zu steuern, wobei die Spracherkennungseinrichtung (102, 202) so konfiguriert ist, dass sie die Steuerbefehlermittlungseinrichtung (104, 204) aktiviert, um einen Steuerbefehl nach Eingang einer akustischen Äußerung (110, 210), beides Kennwortinformationen und Steuerbefehlinformtionen umfassend, zu ermitteln,
das System charakterisiert dadurch
das es konfiguriert ist, die erhaltenen akustischen Äußerungen zu analysieren,
weiterhin umfassend eine Speichereinrichtung (218) zum Speichern der erhaltenen akustischen Äußerungen entsprechend eines vorbestimmten Zeitintervalls und zum Entfernen der frühesten erhaltenen akustischen Äußerung um eine neu hereinkommende akustische Äußerung hinzuzufügen, derart, das zumindest ein Teil einer akustischen Äußerung gespeichert ist, und
die Spracherkennungseinrichtung (102, 202) derart konfiguriert ist, um einen Steuerbefehl in zumindest einer der erhaltenen akustischen Äußerungen gespeichert in der Speichereinheit (218) zu ermitteln, wobei a) die Kennwortinformation nach der Steuerbefehlinformation erhalten wird oder b) die Kennwortinformation zwischen Teilen der Steuerbefehlinformation erhalten wird.

2. Das Sprachdialogsystem nach Anspruch 1, wobei die Spracherkennungseinrichtung (102, 202) so konfiguriert ist, die Steuerbefehlermittlungseinrichtung (104, 204) nach Eingang einer akustischen Äußerung (110, 210) beides, Kennwortinformationen und Steuerbefehlinformationen verschieden von der Kennwortinformation umfassend, zu aktivieren.

3. Das Sprachdialogsystem nach Anspruch 1 oder 2, wobei die Spracherkennungseinrichtung (102, 202) einen ersten Vokabularsatz mit zumindest einem vokabularischen Element entsprechend des Kennwortes und einen zweiten Vokabularsatz mit vokabularischen Elementen entsprechend der Steuerbefehle aufweist.

4. Das Sprachdialogsystem nach Anspruch 3, wobei für zumindest einen Steuerbefehl der zweite Vokabularsatz mehr als ein übereinstimmendes vokabularisches Element aufweist.

5. Das Spachdialogsystem nach Anspruch 3 oder 4, wobei zumindest ein vokabularisches Element des ersten und des zweiten Vokabularsatzes gleich sind.

6. Das Sprachdialogsystem nach einem der Ansprüche 1 bis 5, wobei die Spracherkennungseinrichtung (102, 202) so konfiguriert ist, dass ein Kennwort aus einer mehr als ein Wort aufweisenden Kennwortinformation ermittelt wird.

7. Das Sprachdialogsystem nach einem der Ansprüche 1 bis 6, wobei die Steuerbefehlermittlungseinrichtung (104, 204) so konfiguriert ist, dass ein Steuerbefehl aus einer mehr als ein Wort aufweisenden Steuerbefehlinformation ermittelt wird.

8. Das Sprachdialogsystem nach einem der Ansprüche 1 bis 7, ferner umfassend akustische und/oder optische Ausgabeeinrichtungen (220), um einen ermittelten Steuerbefehl auszugeben und wobei das Sprachdialogsystem so konfiguriert ist, dass eine akustische Äußerung umfassend einer Bestätigungs- oder Ablehnungsbefehlinformation abgewartet wird, um einen ermittelten Steuerbefehl zu bestätigen oder abzulehnen.

9. Das Sprachdialogsystem nach einem der Ansprüche 1 bis 8, ferner umfassend Rauschunterdrückungseinrichtungen (216).

10. Das Sprachdialogsystem nach einem der Ansprüche 1 bis 9, wobei akustische Äußerungen fortlaufend analysiert werden und wobei die früheste erhaltene akustische Äußerung fortlaufend aus der Speichereinrichtung (218) entfernt wird.

11. Eine Methode zur Steuerung eines elektronischen Gerätes (108, 208) mittels Sprachsteuerung, unter Nutzung eines Sprachdialogsystems (100, 200) mit einer Spracherkennungseinrichtung (102, 202), aufweisend eine Steuerbefehlermittlungseinrichtung (104, 204) aktiviert durch ein Kennwort, um einen Steuerbefehl zu ermitteln, um das elektronische Gerät (108, 208) zu steuern, umfassend die Schritte
erhalten von akustischen Äußerungen (300) und analysieren der erhaltenen akustischen Äußerungen, um zumindest eine akustische Äußerung zu ermitteln, die Kennwortinformationen und Steuerbefehlinformationen enthält,
aktivieren (304) der Steuerbefehlermittlungseinrichtung, und
ermitteln eines Steuerbefehls entsprechend der Steuerbefehlinformation,
ferner umfassend den Schritt des Speicherns (301) der erhaltenen akustischen Äußerungen entsprechend eines vorbestimmten Zeitintervalls und entfernen der frühesten erhaltenen akustischen Äußerung, um neu hereinkommende akustische Äußerungen hinzuzufügen, so dass zumindest ein Teil einer akustischen Äußerung gespeichert wird, und wobei der Schritt des ermitteln des Steuerbefehls umfasst, dass der Steuerbefehl in zumindest einer der erhaltenen akustischen Äußerung welche gespeichert ist, ermittelt wird
sofern die Kennwortinformation nach der Steuerbefehlinformation erhalten wird oder
sofern die Kennwortinformation zwischen Teilen der Steuerbefehlinformation erhalten wird.

12. Die Methode nach Anspruch 11, wobei der Schritt des erhalten (300) der akustischen Äußerung umfasst, dass eine akustische Äußerung beides, Kennwortinformation und Steuerbefehlinformation aufweisend, erhalten wird, und Steuerbefehlinformation verschieden von der der Kennwortinformation ist.

13. Die Methode nach Ansruch 12, wobei der Schritt des ermitteln (302) des Kennwortes umfasst, dass die erhaltene Kennwortinformation mit einem ersten Vokabularsatz mit zumindest einem vokabularischen Element entsprechend des Kennwortes verglichen wird und wobei der Schritt des ermitteln (305) des Steuerbefehls umfasst, dass die erhaltene Steuerbefehlinformation mit einem zweiten Vokabularsatz mit vokabularischen Elementen entsprechend der Steuerbefehle verglichen wird.

14. Die Methode nach Anspruch 13, wobei für zumindest einen Steuerbefehl der zweite Vokabularsatz mehr als ein übereinstimmendes vokabularisches Element aufweist.

15. Die Methode nach Anspruch 13 oder 14, wobei zumindest ein vokabularisches Element des ersten und des zweiten Vokabularsatzes gleich sind.

16. Die Methode nach einem der Ansprüche 11 bis 15, wobei der Schritt des ermitteln (302) eines Kennwortes umfasst, ein Kennwort von einer erhaltenen mehr als ein Wort aufweisenden Kennwortinformation zu ermitteln.

17. Die Methode nach einem der Ansprüche 11 bis 16, wobei der Schritt des ermitteln (305) eines Steuerbefehls umfasst, einen Steuerbefehl von einer erhaltenen mehr als ein Wort aufweisenden Steuerbefehlinformation zu ermitteln.

18. Die Methode nach einem der Ansprüche 11 bis 17, nach dem Schritt des ermitteln des Steuerbefehls aufweisend
den Schritt des Ausgebens des ermittelten Steuerbefehls mittels akustischer und/oder optischer Ausgabeeinrichtungen, und
den weiteren Schritt des Abwarten einer akustischen Eingabe umfassend eines Bestätigungs- oder Ablehnungsbefehls, um den ermittelten Steuerbefehl zu bestätigen oder abzulehnen.

19. Die Methode nach einem der Ansprüche 11 bis 18, weiter umfassend den Schritt des Entfernens von zumindest einem Teil von empfangenem Hintergrundgeräuschen während des Schrittes des Empfangens von akustischen Äußerungen.

20. Die Methode nach einem der Ansprüche 11 bis 19, wobei akustische Äußerungen fortlaufend analysiert werden und wobei die früheste empfangene akustische Äußerung fortlaufend von der Speichereinrichtung (218) entfernt wird.

21. Ein Computerprogramm-Produkt, ein oder mehrere Computer lesbare Medien mit Computer ausführbaren Anweisungen umfassend, um die Schritte der Methode aus einem der vorangegangenen Ansprüche 11 bis 20 auszuführen.

## Revendications

1. Système de dialogue vocal (SDS) pour contrôler un dispositif électronique (108, 208) avec un moyen de reconnaissance vocale (102, 202) comprenant un moyen de détermination de commande de contrôle (104, 204) destiné à être activé par un mot-clé pour déterminer une commande de contrôle pour contrôler le dispositif électronique (108, 208), dans lequel le moyen de reconnaissance vocale (102, 202) est configuré pour activer le moyen de détermination de commande (104, 204) pour déterminer une commande de contrôle lors de la réception d'un énoncé acoustique (110, 210) comprenant à la fois des informations de mot-clé et des informations de commande de contrôle,
le système étant **caractérisé en ce que**
il est configuré pour analyser des énoncés acoustiques reçus,
comprenant en outre un moyen de mémorisation (218) pour mémoriser les énoncés acoustiques reçus correspondant à un intervalle de temps prédéterminé et pour supprimer les énoncés acoustiques reçus antérieurement pour ajouter un nouvel énoncé acoustique entrant de sorte qu'au moins une partie d'un énoncé acoustique est mémorisée, et
le moyen de reconnaissance vocale (102, 202) étant configuré pour déterminer une commande de contrôle dans au moins l'un des énoncés acoustiques mémorisés dans le moyen de mémorisation (218) dans lequel a) les informations de mot-clé sont reçues après les informations de commande de contrôle ou b) les informations de mot-clé sont reçues entre des parties des informations de commande de contrôle.

2. Système de dialogue vocal selon la revendication 1, dans lequel le moyen de reconnaissance vocale (102, 202) est configuré pour activer le moyen de détermination de commande de contrôle (104, 204) lors de la réception d'un énoncé acoustique (110, 210) comprenant à la fois des informations de mot-clé et des informations de commande de contrôle différentes des informations de mot-clé.

3. Système de dialogue vocal selon la revendication 1 ou 2, dans lequel le moyen de reconnaissance vocale (102, 202) comprend un premier jeu de vocabulaire, dont au moins un élément de vocabulaire correspond au mot-clé et un second ensemble de vocabulaire avec des éléments de vocabulaire correspondant aux commandes de contrôle.

4. Système de dialogue vocal selon la revendication 3, dans lequel, pour au moins une commande de contrôle, le second jeu de vocabulaire comprend plusieurs éléments de vocabulaire correspondants.

5. Système de dialogue vocal selon la revendication 3 ou 4, dans lequel au moins un élément de vocabulaire des premier et second ensembles de vocabulaire est égal.

6. Système de dialogue vocal selon l'une des revendications 1 à 5, dans lequel le moyen de reconnaissance vocale (102, 202) est configuré pour déterminer un mot-clé d'après des informations de mot-clé comprenant plusieurs mots.

7. Système de dialogue vocal selon l'une des revendications 1 à 6, dans lequel le moyen de détermination de commande de contrôle (104, 204) est configuré pour déterminer une commande de contrôle d'après des informations de commande de contrôle comprenant plusieurs mots.

8. Système de dialogue vocal selon l'une des revendications 1 à 7, comprenant en outre un moyen de sortie acoustique et/ou optique (220) pour fournir en sortie la commande de contrôle déterminée et dans lequel le système de dialogue vocal est configuré pour attendre un énoncé acoustique comprenant des informations de commande de confirmation ou de rejet pour confirmer ou rejeter la commande de contrôle déterminée.

9. Système de dialogue vocal selon l'une des revendications 1 à 8, comprenant en outre un moyen de suppression de bruit (216).

10. Système de dialogue vocal selon l'une des revendications 1 à 9, dans lequel les énoncés acoustiques sont analysés en continu et dans lequel l'énoncé acoustique reçu le plus tôt est supprimé en continu du moyen de mémorisation (218).

11. Procédé de contrôle d'un dispositif électronique (108, 208) par l'intermédiaire d'un contrôle vocal, utilisant un système de dialogue vocal (100, 200) avec un moyen de reconnaissance vocale (102, 202) comprenant un moyen de détermination de commande de contrôle (104, 204) destiné à être activé par un mot-clé pour déterminer une commande de contrôle pour contrôler le dispositif électronique (108, 208), comprenant les étapes consistant à
recevoir des énoncés acoustiques (300) et analyser les énoncés acoustiques reçus pour déterminer au moins un énoncé acoustique contenant des informations de mot-clé et des informations de commande de contrôle,
déterminer (302) un mot-clé correspondant aux informations de mot-clé,
activer (304) le moyen de détermination de commande, et
déterminer (305) une commande de contrôle correspondant aux informations de commande de contrôle,
comprenant en outre l'étape de mémorisation (301) des énoncés acoustiques reçus correspondant à un intervalle de temps prédéterminé et de suppression des énoncés acoustiques reçus le plus tôt pour ajouter un nouvel énoncé acoustique entrant de sorte qu'au moins une partie de l'énoncé acoustique est mémorisée, et dans lequel l'étape de détermination de la commande de contrôle comprend la détermination de la commande de contrôle dans l'un au moins des énoncés acoustiques reçus ayant été mémorisés
si les informations de mot-clé sont reçues après les informations de commandes de contrôle ou
si les informations de mot-clé sont reçues entre des parties des informations de commande de contrôle.

12. Procédé selon la revendication 11, dans lequel l'étape de réception (300) des énoncés acoustiques comprend la réception d'un énoncé acoustique comprenant à la fois des informations de mot-clé et des informations de commande de contrôle qui sont différentes des informations de mot-clé.

13. Procédé selon la revendication 12, dans lequel l'étape de détermination (302) d'un mot-clé comprend la comparaison des informations de mot-clé reçues avec un premier jeu de vocabulaire comprenant au moins un élément de vocabulaire correspondant au mot-clé et dans lequel l'étape de détermination (305) d'une commande de contrôle comprend la comparaison des informations de commande de contrôle reçues avec un second jeu de vocabulaire avec des éléments de vocabulaire correspondant aux commandes de contrôle.

14. Procédé selon la revendication 13, dans lequel, pour au moins une commande de contrôle, le second jeu de vocabulaire comprend plusieurs éléments de vocabulaire correspondants.

15. Procédé selon la revendication 13 ou 14, dans lequel au moins un élément de vocabulaire des premier et second ensembles de vocabulaire est égal.

16. Procédé selon l'une des revendications 11 à 15, dans lequel l'étape de détermination (302) d'un mot-clé comprend la détermination du mot-clé d'après des informations de mot-clé reçues comprenant plusieurs mots.

17. Procédé selon l'une des revendications 11 à 16, dans lequel l'étape de détermination (305) d'une commande de contrôle comprend la détermination d'une commande de contrôle d'après des informations de commande de contrôle reçues comprenant plusieurs mots.

18. Procédé selon l'une des revendications 11 à 17, comprenant, après l'étape de détermination de la commande de contrôle
l'étape de fourniture en sortie de la commande de contrôle déterminée par l'intermédiaire d'un moyen de sortie acoustique et/ou optique, et
l'étape suivante d'attente d'une entrée acoustique comprenant une commande de confirmation ou de rejet pour confirmer ou rejeter la commande de contrôle déterminée.

19. Procédé selon l'une des revendications 11 à 18, comprenant en outre l'étape de retrait d'au moins une partie du bruit de fond reçu pendant l'étape de réception d'un énoncé acoustique.

20. Procédé selon l'une des revendications 11 à 19, dans lequel les énoncés acoustiques sont analysés en continu et dans lequel l'énoncé acoustique reçu le plus tôt est supprimé en continu du moyen de mémorisation (218) .

21. Produit de programme informatique comprenant un ou plusieurs supports lisibles par un ordinateur contenant des instructions exécutables par un ordinateur pour effectuer les étapes du procédé selon l'une des revendications 11 à 20 précédentes.
